# EUROPÄISCHE PATENTANMELDUNG

(11) **EP 2 608 370 A2**
(43) Veröffentlichungstag der Anmeldung: **26.06.2013**
(21) Anmeldenummer: 12007747.4
(22) Anmeldetag: 15.11.2012
(51) Int. Cl.: H02K 19/18

(54) **Elektrische Maschine für eine Windenergieanlage**

(30) Priorität: 24.12.2011 DE 102011122411; 08.02.2012 DE 102012002347
(71) Anmelder: ROBERT BOSCH GMBH, 70442 Stuttgart (DE)
(72) Erfinder: Vath, Andreas, 63849 Leidersbach (DE); Stamm, Isabella, 97854 Steinfeld (DE)
(74) Vertreter: Wiesmann, Stephan

(57) **Zusammenfassung**

Die Erfindung betrifft eine Elektrische Maschine (100) aufweisend ein feststehendes selbst- oder fremderregtes Sekundärteil (21), ein feststehendes Primärteil (22) mit einer Primärteilwicklung, einen drehbar gelagerten magnetischen Modulator (23), der eine magnetische Flussdichte moduliert, wobei der magnetische Modulator (23) zwischen Sekundärteil (21) und Primärteil (23) angeordnet ist oder das Primärteil (23) zwischen Sekundärteil (21) und magnetischem Modulator (23) angeordnet ist.

## Beschreibung

Die vorliegende Erfindung betrifft eine elektrische Maschine für eine Windenergieanlage. Es sei jedoch betont, dass die elektrische Maschine auch in anderen Gebieten vorteilhaft verwendet werden kann ist und sowohl als Generator zur Stromerzeugung als auch als Motor zur Bewegungserzeugung eingesetzt werden kann.

### Stand der Technik

Ein großer Teil der bestehenden Windenergieanlagen ist mit schnell drehenden Generatoren ausgestattet, wobei zur Übersetzung der relativ langsamen Umdrehungszahl des Windrades auf die Generatorumdrehungszahl mehrstufige Getriebe eingesetzt werden. Daneben werden auch Generatoren eingesetzt, die getriebelos mit dem Windrad gekoppelt sind. Um das Konzept des Direktantriebs zu verwirklichen, sind die Generatoren als vielpolige, langsam drehende, permanent erregte Synchronmaschinen ausgelegt.

Diese Bauart führt jedoch zu einer signifikanten Gewichtszunahme im Vergleich zu Anlagen mit Getriebe, da die Sekundärteile (Rotor bzw. Läufer) der Generatoren relativ große Durchmesser aufweisen und mittels massiver Verbindungselemente, wie z.B. Speichen, mit der Antriebswelle (Nabe des Windrades) verbunden sind. Der vielpolige Magnetkreis der direkt angetriebenen Maschinen weist einen deutlich größeren Umfang als ein Magnetkreis einer schnell drehenden 4- oder 6-poligen, doppelt gespeisten Asynchronmaschine auf. In der Folge treten deutlich größere Drehmomente auf, die von der Nabe zum Sekundärteil übertragen werden müssen. Ein Beispiel einer derartigen permanent erregten Synchronmaschine ist in der US 2004/0155537 A1 gezeigt.

Es ist somit wünschenswert, eine elektrische Maschine für eine Windenergieanlage anzugeben, bei der die Drehmomentübertragung verbessert wird und insbesondere Gewicht eingespart werden kann.

### Offenbarung der Erfindung

Erfindungsgemäß wird eine elektrische Maschine mit den Merkmalen des Patentanspruchs 1 vorgeschlagen. Vorteilhafte Ausgestaltungen sind Gegenstand der Unteransprüche sowie der nachfolgenden Beschreibung.

### Vorteile der Erfindung

Eine Maßnahme der Erfindung ist, ein magnetisches Getriebe baulich mit der elektrischen Maschine zusammenzufassen. Insgesamt weist die elektrische Maschine ein stillstehendes Primärteil mit einer Primärteilwicklung, ein ebenfalls stillstehendes selbst- oder fremderregtes Sekundärteil und einen rotierenden magnetischen Modulator auf, der das vom Sekundärteil erzeugte Magnetfeld moduliert. Auf diese Weise können Induktionsspannung und Frequenz in der Primärteilwicklung deutlich erhöht werden. Der Modulator kann zwischen Primärteil und Sekundärteil angeordnet sein, d.h. Sekundärteil - Modulator- Primärteil. Alternativ ist auch eine Anordnung Sekundärteil - Primärteil -Modulator möglich. Die Getriebe-Generatoreinheit kommt dadurch mit nur drei funktionstragenden Komponenten aus, von denen dennoch nur eine bewegt werden muss. Dies vereinfacht Aufbau und Lagerung.

Der magnetische Modulator kann aus abwechselnd ferromagnetischen und nicht-ferromagnetischen Komponenten bestehen. Bevorzugterweise besteht eine Tragstruktur bzw. ein Rahmen des Modulators aus einem nicht-ferromagnetischen Material, wie z.B. Aluminium. Die Tragstruktur kann beispielsweise mindestens zwei nicht-ferromagnetische Ringe aufweisen, die durch ebenfalls nicht nicht-ferromagnetische Streben verbunden sind. Zwischen die Streben können dann ferromagnetische Komponenten eingesetzt werden, vorzugsweise in Art einer Nut-Feder-Befestigung. Ein Modulator kann auch aus mehreren solchen Tragstrukturen bestehen, die miteinander verbunden, bspw. verschraubt, sind.

Die beschriebene (magnetische) Getriebe-Generatoreinheit wiederum wird angetrieben von einer mechanischen Getriebeanordnung. Eine Antriebswelle der Getriebeanordnung kann bspw. von einem Rotor einer Windenergieanlage o.ä. angetrieben werden. Dabei wird die hohe Kraftdichte der mechanischen Drehmoment- oder Leistungsübertragung mit der magnetischen gekoppelt. Die elektrische Maschine mit integriertem magnetischen Getriebe erfüllt in dieser Kombination eine Doppelfunktion: Zunächst dient das magnetische Getriebe zur Spannungs- und Frequenzerhöhung in den Spulenwicklungen der elektrischen Maschine (bei Betrieb als Generator) und damit auch zur Erzeugung elektrischer Energie mit sehr hohem Wirkungsgrad, da insbesondere die ohmschen Verluste deutlich reduziert werden können.

Durch eine entsprechende Wahl der Anzahl und Anordnung der ferromagnetischen und nicht-ferromagnetischen Modulatorkomponenten können Amplitude und Frequenz der Induktionsspannung in der Primärteilwicklung des Generators sehr gezielt eingestellt werden. Hierbei können mechanisches und magnetisches Übersetzungsverhältnis so ausgelegt werden, dass die Gesamtkosten der Getriebe-Generatoreinheit möglichst gering sind, wobei dennoch ein sehr hoher Wirkungsgrad erzielt werden kann.

Es ist weiter vorteilhaft, zwischen Getriebe und elektrischer Maschine eine elektrische Isolierung einzusetzen, um das Getriebe vor Schäden durch sog. Lagerströme zu schützen. Alternativ oder zusätzlich kann das Getriebe geerdet werden, z.B. durch Schleifringe an den Abtriebswellen. Auf diese Weise kann das Potential so reduziert werden, dass keine Lagerströme mehr auftreten. Die Isolierung kann auch in einer Kupplung integriert sein.

Gemäß einer bevorzugten Ausführungsform ist die Isolierung in einer Steckkupplung integriert, wobei mit isolierendem Material, bspw. Elastomer, überzogene Zapfen in zugeordnete Aussparungen gesteckt werden oder wobei Zapfen in mit isolierendem Material, bspw. Elastomer, ausgekleidete Aussparungen gesteckt werden. Auf diese Weise kann gleichzeitig eine einfache Kupplung mit elektrischer Isolierung, die dennoch ein hohes Drehmoment übertragen kann, bereitgestellt werden.

Die Kombination von mechanischem Getriebe mit der Getriebe-Generatoreinheit erlaubt zusätzlich, die Gehäusestruktur des mechanischen Getriebes zu nutzen, um mindestens einen Teil des Drehmoments, der Gewichtskraft und weiterer Kräfte der elektrischen Maschine aufzunehmen. Dies führt zu Material- und Bauraumeinsparung. Die Kombination erlaubt auch, wenigstens eine Abtriebswelle des mechanischen Getriebes über die elektrische Maschine zu lagern oder umgekehrt und so auf mindestens eine Lagerstelle in der kompletten Anordnung zu verzichten.

Ist die Abtriebswelle mit einem schrägverzahnten Zahnrad der Getriebeanordnung verbunden und/oder mit einem Kegelrollenlager gelagert, können Axialkräfte besonders gut abgestützt werden. Werden dabei der Schrägungswinkel der Verzahnung und der Kegelwinkel des Kegelrollenlagers so gewählt, dass die daraus resultierenden Axialkräfte sich entgegenwirken, also aufheben, so kann bei der Auswahl des Kegelrollenlagers auf kleinere Baugrößen zurückgegriffen werden und damit Kosten gespart werden. Auf diese Weise wird auch eine Axialbewegung im Antriebsstrang reduziert, was sich positiv auf Geräuschentwicklung und Verschleiß auswirkt. Insgesamt sind schrägverzahnte Getriebe üblicherweise geräuschärmer als geradverzahnte.

Ist die Abtriebswelle mit einem geradverzahnten Zahnrad der Getriebeanordnung verbunden und/oder mit einem Zylinderrollen- oder Kugellager gelagert, wirkt sich das positiv auf den Wirkungsgrad aus.

Es ist vorteilhaft, zwischen einem Planetengetriebe und der elektrischen Maschine eine Kupplung einzusetzen, die zulässt, dass sich das Sonnenrad im Planetengetriebe optimal gegenüber der Verzahnung ausrichten kann. Zum Schutz des Antriebsstrangs im Falle eines Generatorkurzschlusses kann der magnetische Modulator bei entsprechender Auslegung auch als Rutschkupplung arbeiten und damit die Last auf den Antriebsstrang deutlich reduzieren. In diesem Fall gehen magnetisch leitende Teile des magnetischen Modulators in die Sättigung, sodass das übertragbare Moment begrenzt wird.

Auf der nicht dem mechanischen Getriebe zugewandten Seite der Getriebe-Generatoreinheit wird zweckmäßigerweise eine Bremse angebracht, die zum Abbremsen der Anordnung dient.

Eine Momentwelligkeit kann durch entsprechenden Betrieb des Generators reduziert werden, insbesondere durch die elektrische Beschaltung der Primärteilwicklungen. Dies kann durch entsprechende Ansteuerung eines der Primärteilwicklung nachgeschalteten Stromrichters (z.B. Gleichrichter mit Transistorschaltern) erfolgen. Dies führt zu geringeren Belastungen des kompletten Antriebsstrangs sowie zu geringeren Geräuschemissionen der Getriebe-Generatoreinheit.

Vorzugsweise umfasst die Getriebeanordnung mehrere Getriebestufen, insbesondere zwei. Diese können in Reihe oder parallel (als Leistungsverzweigung) geschaltet sein. Es kann eine asymmetrische Leistungsverzeigung (z.B. 75:25) vorgesehen sein, wobei vorzugsweise eine Eingangsstufe der Getriebeanordnung eine höhere Leistung überträgt als die zweite Stufe. Dadurch werden Übersetzungsverhältnisse, insbesondere größere Übersetzungsverhältnisse, ermöglicht, die für die Auslegung der Generatoren Vereinfachungen bedeuten.

Das Prinzip der verwendeten elektrischen Maschine kann ein permanentmagneterregter (d.h. selbsterregter) und/oder ein elektrisch erregter (d.h. fremderregter) Generator in den verschiedenen Bauweisen, Radialflussgenerator und/oder Axialflussgenerator und/oder Transversalflussgenerator und/oder Generator mit Durchmesserwicklung und/oder supraleitender Generator sein.

Insbesondere vorteilhaft ist eine Verwendung einer erfindungsgemäßen elektrischen Maschine zur Stromerzeugung in Kraftwerken, insbesondere in Windenergieanlagen aber auch in Wellen- Gezeiten-, oder Wasserkraftwerken.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt eine erste bevorzugte Ausführungsform einer erfindungsgemäßen elektrischen Maschine mit einer Planetengetriebeanordnung in einer Längsschnittsansicht.
- Figur 2: zeigt die elektrische Maschine gemäß Figur 1 in einer Rückansicht.
- Figur 3: zeigt eine zweite bevorzugte Ausführungsform einer erfindungsgemäßen elektrischen Maschine mit einer Planetengetriebeanordnung und einer Isolierung in einer Längsschnittsansicht.
- Figur 4: zeigt schematisch eine bevorzugte Steckkupplung mit Isolierung zum Ankuppeln einer mechanischen Getriebeanordnung an die elektrische Maschine.

### Detaillierte Beschreibung der Zeichnung

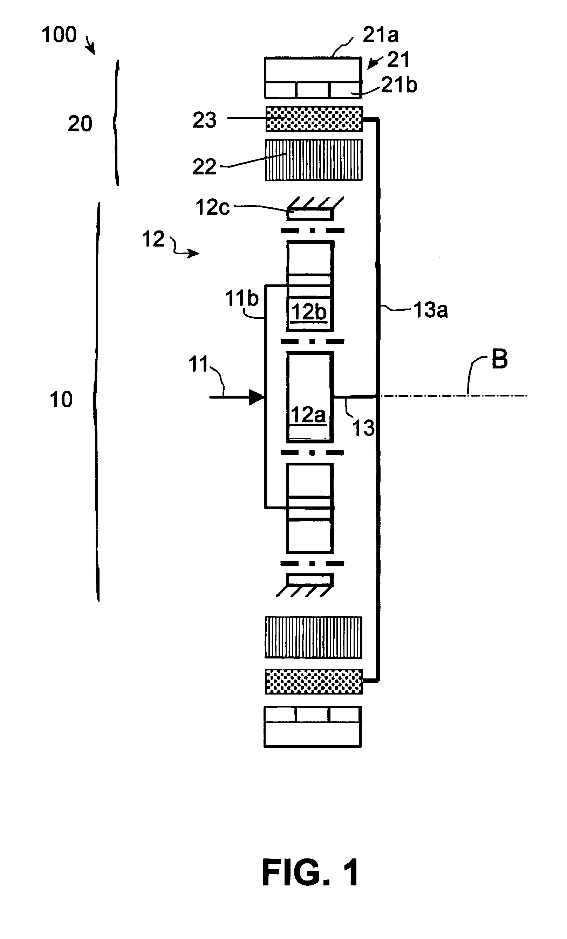

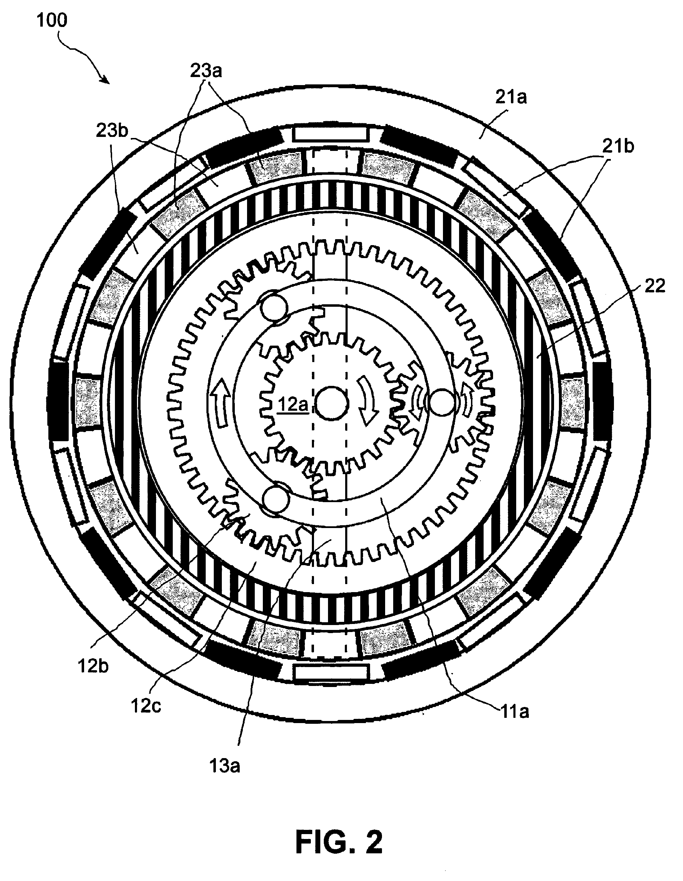

In den Figuren 1 bis 4 sind gleiche Elemente mit gleichen Bezugszeichen versehen. Zunächst werden die Figuren 1 und 2 zusammenhängend und übergreifend beschrieben, in denen eine erste bevorzugte Ausführungsform einer erfindungsgemäßen elektrischen Maschine in einer Längs- bzw. Querschnittsansicht gezeigt ist.

Die elektrische Maschine ist insgesamt mit 100 bezeichnet. Sie weist in der gezeigten Ausführungsform eine Planetengetriebeanordnung 10 und eine integrierte (magnetische) Getriebe-Generatoreinheit 20 auf, welche die Funktion eines magnetischen Getriebes mit der Stromerzeugungsfunktion der elektrischen Maschine verbindet.

Die Planetengetriebeanordnung 10 umfasst eine Antriebswelle 11, welche eine Planetengetriebestufe 12 antreibt. Die Antriebswelle 11 ist über einen Steg 11 b mit Planetenrädern 12b der Planetengetriebestufe 12 verbunden. Ein Hohlrad 12c ist drehfest angeordnet, ein Sonnenrad 12a treibt eine Abtriebswelle 13 an.

Im Folgenden soll nun die Funktionsweise zur Stromerzeugung erläutert werden.

Die elektrische Maschine weist ein feststehendes Sekundärteil 21 und ein feststehendes Primärteil 22 auf. Das Sekundärteil ist im gezeigten Beispiel fremderregt, d.h. mit einer Permanentmagnetanordnung 21 b versehen, welche auf einem ferromagnetischen Trägerring 21 a für den Magnetrückschluss angeordnet sind. Im Beispiel gemäß Figur 2 weist das Sekundärteil zehn Polpaare auf.

Das Primärteil 22 ist mit einer Anzahl von Primärteilwicklungen ausgestattet, in welche durch die Änderung der magnetischen Flussdichte ein Strom induziert wird. Zwischen dem Sekundärteil 21 und dem Primärteil 22 ist dafür ein magnetischer Modulator 23 drehbar angeordnet, welcher die magnetische Flussdichte zwischen dem Sekundärteil 21 und dem Primärteil 22 moduliert. Der magnetische Modulator 23 weist dazu eine Anzahl von ferromagnetischen Elementen 23a auf, wobei jeweils zwei benachbarte ferromagnetische Elemente 23a durch ein nicht-ferromagnetisches Element 23b getrennt sind. Die ferromagnetischen Elemente können beispielsweise aus einer Eisen-Nickel-Legierung bestehen, wohingegen die nicht-ferromagnetischen Elemente 23b im einfachsten Fall aus Luft bestehen, jedoch auch aus nicht-ferromagnetischem Material, wie z.B. Aluminium, bestehen können.

Eine Möglichkeit zur einfachen Bereitstellung eines bevorzugten magnetischen Modulators 23 besteht in der Bereitstellung eines nicht-ferromagnetischen Rahmens, beispielsweise aus Aluminium, in welchen die ferromagnetischen Elemente eingesetzt werden. Die Befestigung der ferromagnetischen Magnete 23a an einem solchen Rahmen kann beispielsweise in der Art einer Nut- und Federverbindung erfolgen, was die Befestigung vereinfacht. Der Rahmen kann käfigförmig ausgebildet sein und aus zwei Ringen bestehen, zwischen denen sich Streben axial erstrecken.

Die Abtriebswelle 13 ist über einen Steg 13a mit dem magnetischen Modulator 23 verbunden. In der Folge dreht sich der Modulator um eine Rotationsachse B.

Diese Ausgestaltung führt zu einer signifikanten Erhöhung der Induktionsspannung in dem Primärteil 22 durch die erhöhte Veränderungshäufigkeit der magnetischen Flussdichte. Dies erlaubt eine kompakte (hier schmale) Bauform für die stromerzeugenden Teile der elektrischen Maschine, insbesondere für das Sekundärteil 21 und das Primärteil 22, da eine häufige Veränderung der magnetischen Flussdichte nicht durch eine entsprechend hohe Anzahl von Polpaaren auf dem Sekundärteil erzielt werden muss.

Neben der in Figur 1 gezeigten Anordnung, bei der Sekundärteil außen, Modulator in der Mitte und Primärteil innen angeordnet sind, sind ebenso Anordnungen vorteilhaft, bei denen
- Primärteil außen, Modulator in der Mitte und Sekundärteil innen,
- Modulator außen, Primärteil in der Mitte und Sekundärteil innen, oder
- Sekundärteil außen, Primärteil in der Mitte und Modulator innen,
angeordnet sind.

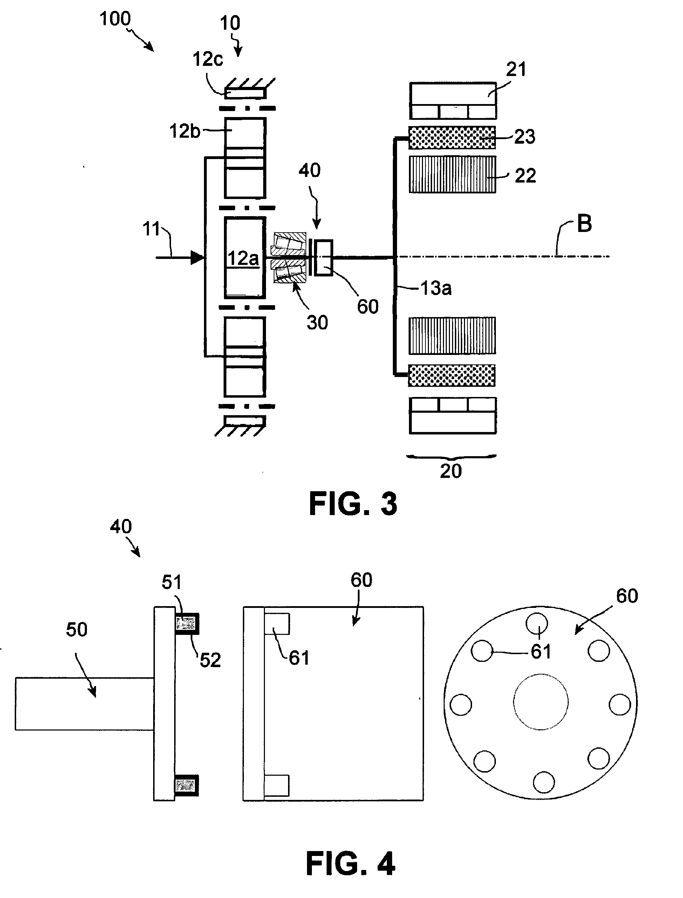

Figur 3 zeigt eine zweite bevorzugte Ausführungsform einer erfindungsgemäßen elektrischen Maschine in einer Längsschnittsansicht. Figur 4 zeigt schematisch eine bevorzugte Steckkupplung mit Isolierung zum Ankuppeln einer mechanischen Getriebeanordnung an die elektrische Maschine, wie sie auch in Figur 3 gezeigt ist. Es sei betont, dass die Kupplung ebenso vorteilhaft bei einer anderen Ausführungsform, insbesondere gemäß den Figuren 1 und 2, eingesetzt werden kann.

Die elektrische Maschine gemäß Figur 3 unterscheidet sich von der elektrischen Maschine gemäß den Figuren 1 und 2 im Wesentlichen durch eine andere Anordnung der Getriebe-Generatoreinheit 20. Diese umgibt in Figur 3 die Getriebeanordnung 10 im Gegensatz zu Figur 1 nicht, sondern ist neben dieser angeordnet. Dies führt zu einer Verlängerung der Anlage, gleichzeitig jedoch zu einer Reduzierung des Gesamtdurchmessers.

In Figur 3 sind drei weitere Merkmale erstmalig dargestellt, die jedoch von der speziellen Ausgestaltung der elektrischen Maschine und auch von einander unabhängig sind. Diese könnten ebenso in den Figuren 1 und 2 verwirklicht sein.

In der Ausführungsform gemäß Figur 3 ist das Sonnenrad 12C des Planetengetriebes 12 schrägverzahnt. Dadurch kann eine, bspw. aufgrund einer Windkraft, auf die Antriebswelle 12 wirkende (insbesondere variierende) Axialkraft besser abgestützt werden. Weiterhin führt eine Schrägverzahnung zu einer Geräuschreduzierung.

Zusätzlich ist die Abtriebswelle 13 der Getriebeanordnung 10 in einem Kegelrollenlager gelagert, sodass ebenfalls axiale Kräfte, welche bei einer Windenergieanlage insbesondere durch den Winddruck auf die Antriebswelle 11 hervorgerufen werden, gut abgestützt werden können.

Schließlich ist zwischen der Getriebeanordnung 10 und der Getriebe-Generatoreinheit 20 eine elektrisch isolierende Kupplung 40 angeordnet, welche einerseits die Getriebeanordnung 10 elektrisch von der magnetischen Getriebe-Generatoreinheit 20 isoliert und so schädigende Lagerströme verhindert, wobei dennoch ein hohes Drehmoment übertragen werden kann, und welche andererseits zu einer schnell und einfach herstellbaren und lösbaren Verbindung zwischen Getriebeanordnung 10 und Getriebe-Generatoreinheit 20 führt. Dies ist insbesondere für Montage- und Wartungseinsätze vorteilhaft.

Die Kupplung 40 wird nachfolgend unter Bezugnahme auf Figur 4 näher erläutert.

Die Kupplung 40 ist als Steckkupplung ausgebildet, bei der ein erstes Kupplungselement 50 in ein zweites Kupplungselement 60 eingesteckt wird. Das erste Kupplungselement 50 kann insbesondere an der Abtriebswelle 13 befestigt sein, das zweite Kupplungselement 60 an dem Steg 13a.

Das erste Kupplungselement 50 weist Zapfen 51 auf, die in entsprechende Aussparungen 61 des zweiten Kupplungselements 60 eingesteckt werden. Für die elektrische Isolierung sind die Zapfen 51 mit einem elektrisch isolierenden Material 52, insbesondere einem Elastomer wie Gummi, überzogen.

Die Kupplung 40 ist leicht zu schließen und zu lösen, isoliert die gekuppelten Bauteile elektrisch voneinander und kann dennoch ein hohes Drehmoment übertragen.

## Patentansprüche

1. Elektrische Maschine (100) aufweisend
ein feststehendes selbst- oder fremderregtes Sekundärteil (21),
ein feststehendes Primärteil (22) mit einer Primärteilwicklung,
einen drehbar gelagerten magnetischen Modulator (23), der eine magnetische Flussdichte moduliert,
wobei der magnetische Modulator (23) zwischen Sekundärteil (21) und Primärteil (23) angeordnet ist oder das Primärteil (23) zwischen Sekundärteil (21) und magnetischem Modulator (23) angeordnet ist.

2. Elektrische Maschine (100) nach Anspruch 1, weiter aufweisend eine Getriebeanordnung (10) mit einer Antriebswelle (11) und einer Abtriebswelle (13, 15), mit der der magnetische Modulator (23) verbunden ist.

3. Elektrische Maschine (100) nach Anspruch 2, wobei die Getriebeanordnung (10) ein mechanisches Getriebe, insbesondere ein Planetengetriebe (12) und/oder ein Stirnradgetriebe aufweist.

4. Elektrische Maschine (100) nach Anspruch 2 oder 3 wobei zwischen der Getriebeanordnung (10) und dem magnetischen Modulator (23) eine elektrische Isolierung angeordnet ist.

5. Elektrische Maschine (100) nach mindestens einem der vorangehenden Ansprüche, wobei der magnetische Modulator (23) eine Anzahl von beabstandet angeordneten, ferromagnetischen Elementen (23a) aufweist.

6. Elektrische Maschine (100) nach Anspruch 5, wobei jeweils zwei benachbarte ferromagnetische Elemente (23a) durch ein nicht-ferromagnetisches Element (23b) getrennt sind.

7. Elektrische Maschine (100) nach Anspruch 5 oder 6, wobei das Sekundärteil (21) weniger magnetische Polpaare aufweist als der Modulator ferromagnetische Elemente (23a).

8. Elektrische Maschine (100) nach mindestens einem der Ansprüche 4 bis 7, wobei die elektrische Isolierung in einer Kupplung (40) zur Verbindung der Abtriebswelle (11) der Getriebeanordnung (10) mit dem magnetischen Modulator (23) integriert ist.

9. Elektrische Maschine (100) nach Anspruch 8, wobei die Kupplung (40) als Steckkupplung ausgebildet ist, wobei mit isolierendem Material (52), bspw. Elastomer, überzogene Zapfen (51) in zugeordnete Aussparungen (61) gesteckt werden oder wobei Zapfen in mit isolierendem Material, bspw. Elastomer, ausgekleidete Aussparungen gesteckt werden.

10. Elektrische Maschine (100) nach mindestens einem der Ansprüche 2 bis 9, wobei Sekundärteil (21), Primärteil (22) und magnetischer Modulator (23) jeweils zylinderförmig ausgebildet sind und die Getriebeanordnung (10) umgeben.

11. Elektrische Maschine (100) nach einem der Ansprüche 2 bis 10, wobei der magnetische Modulator (23) mit der Abtriebswelle (13; 15) gemeinsam gelagert ist.

12. Elektrische Maschine (100) nach einem der Ansprüche 2 bis 11, wobei die Abtriebswelle mit einem schrägverzahnten Zahnrad der Getriebeanordnung (10) verbunden ist und/oder mit einem Kegelrollenlager (30) gelagert ist.

13. Elektrische Maschine (100) nach einem der Ansprüche 2 bis 12, wobei die Getriebeanordnung ein koaxiales Getriebe aufweist.

14. Elektrische Maschine (100) nach einem der Ansprüche 2 bis 13, wobei die Abtriebswelle elektrisch mit Masse verbunden ist, insbesondere über Schleifringe.

15. Kraftwerk, insbesondere Windenergieanlage, mit einer elektrischen Maschine (100) nach einem der vorstehenden Ansprüche.
